# EUROPEAN PATENT APPLICATION

(11) **EP 4 568 383 A1**
(43) Date of publication of application: **11.06.2025**
(21) Application number: 23849454.6
(22) Date of filing: 02.08.2023
(51) Int. Cl.: H04W 72/04

(54) **INFORMATION TRANSMISSION METHOD AND APPARATUS, AND TERMINAL AND NETWORK-SIDE DEVICE**

(30) Priority: 05.08.2022 CN 202210938842
(71) Applicant: Vivo Mobile Communication Co., Ltd., Dongguan, Guangdong 523863 (CN)
(72) Inventor: HE, Ranran, Dongguan, Guangdong 523863 (CN); YANG, Xiaodong, Dongguan, Guangdong 523863 (CN)
(74) Representative: Winter, Brandl - Partnerschaft mbB
(86) International application number: PCT/CN2023/110695
(87) International publication number: WO 2024/027749

(57) **Abstract**

The present application belongs to the technical field of communications. Disclosed are an information transmission method and apparatus, and a terminal and a network-side device. The information transmission method in the embodiments of the present application comprises: a terminal reporting target information to a network-side device, the target information comprising at least one of the following: direct-current location information of the terminal, and first information, which is used for indicating a frequency component used for determining the direct-current location information of the terminal, wherein the direct-current location information of the terminal is used for indicating direct-current location information associated with N component carrier combinations, and the direct-current location information associated with different component carrier combinations is determined on the basis of the same frequency component, or, the direct-current location information associated with different component carrier combinations is determined at least partially on the basis of different frequency components, N being a positive integer.

## Description

### CROSS-REFERENCE TO RELATED APPLICATIONS

This application claims priority to Chinese Patent Application No. 202210938842.6 filed in China on August 5, 2022, which is incorporated herein by reference in its entirety.

### TECHNICAL FIELD

This application belongs to the field of communication technologies, and in particular, to an information transmission method and apparatus, a terminal, and a network-side device.

### BACKGROUND

In a mobile communication system, to support a case that a quantity of component carriers (Component Carriers, CCs) configured for a terminal in intra-band (intra-band) carrier aggregation (Carrier Aggregation, CA) is greater than 2, the terminal needs to report direct current location (Direct Current Location, DC Location) information of the terminal to a network side. Currently, the direct current location information of the terminal may be determined based on a frequency component of an activated component carrier, a configured component carrier, an activated bandwidth part (BandWidth Part, BWP), a configured BWP, or another type. However, in a case that the terminal needs to report the direct current location information of the terminal, there is no relevant solution to how the terminal specifically determines the direct current location information of the terminal based on the frequency component.

### SUMMARY

Embodiments of this application provide an information transmission method and apparatus, a terminal, and a network-side device, to provide a manner for the terminal to determine direct current location information of the terminal based on a frequency component.

According to a first aspect, an information transmission method is provided. The method includes: A terminal reports target information to a network-side device, where the target information includes at least one of the following:
direct current location information of the terminal; and
first information, where the first information indicates a frequency component used for determining the direct current location information of the terminal.

The direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

According to a second aspect, an information transmission apparatus is provided. The apparatus includes: a first reporting module, configured to report target information to a network-side device, where the target information includes at least one of the following:
direct current location information of a terminal; and
first information, where the first information indicates a frequency component used for determining the direct current location information of the terminal.

The direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

According to a third aspect, an information transmission method is provided. The method includes: A network-side device receives target information from a terminal, where the target information includes at least one of the following:
direct current location information of the terminal; and
first information, where the first information indicates a frequency component used for determining the direct current location information of the terminal.

The direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

According to a fourth aspect, an information transmission apparatus is provided. The apparatus includes: a first receiving module, configured to receive target information from a terminal, where the target information includes at least one of the following:
direct current location information of the terminal; and
first information, where the first information indicates a frequency component used for determining the direct current location information of the terminal.

The direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

According to a fifth aspect, a terminal is provided. The terminal includes a processor and a memory. The memory stores a program or instructions that can be run on the processor, and when the program or the instructions are executed by the processor, steps of the method according to the first aspect are implemented.

According to a sixth aspect, a terminal is provided, including a processor and a communication interface. The communication interface is configured to report target information to a network-side device, where the target information includes at least one of the following: direct current location information of the terminal; and first information, where the first information indicates a frequency component used for determining the direct current location information of the terminal.

The direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

According to a seventh aspect, a network-side device is provided. The network-side device includes a processor and a memory. The memory stores a program or instructions that can be run on the processor, and when the program or the instructions are executed by the processor, steps of the method according to the third aspect are implemented.

According to an eighth aspect, a network-side device is provided, including a processor and a communication interface. The communication interface is configured to receive target information from a terminal, where the target information includes at least one of the following: direct current location information of the terminal; and first information, where the first information indicates a frequency component used for determining the direct current location information of the terminal.

The direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

According to a ninth aspect, an information transmission system is provided, including: a terminal and a network-side device, where the terminal may be configured to perform steps of the information transmission method according to the first aspect, and the network-side device may be configured to perform steps of the information transmission method according to the third aspect.

According to a tenth aspect, a readable storage medium is provided. The readable storage medium stores a program or instructions, and when the program or the instructions are executed by a processor, steps of the method according to the first aspect are implemented, or steps of the method according to the third aspect are implemented.

According to an eleventh aspect, a chip is provided. The chip includes a processor and a communication interface. The communication interface is coupled to the processor, and the processor is configured to run a program or instructions, to implement steps of the method according to the first aspect, or implement steps of the method according to the third aspect.

According to a twelfth aspect, a computer program/program product is provided. The computer program/program product is stored in a storage medium. The computer program/program product is executed by at least one processor, to implement steps of the method according to the first aspect, or implement steps of the method according to the third aspect.

In embodiments of this application, the terminal reports at least one of the direct current location information of the terminal and the first information to the network-side device. The first information indicates the frequency component used for determining the direct current location information of the terminal, the direct current location information of the terminal indicates the direct current location information associated with the N component carrier combinations, and the direct current location information associated with different component carrier combinations is determined based on the same frequency component, or the direct current location information associated with different component carrier combinations is at least partially determined based on different frequency components. In other words, the terminal may determine the direct current location information associated with the N component carrier combinations based on the same frequency component, or the terminal may determine the direct current location information associated with at least partially different component carrier combinations in the N component carrier combinations based on different frequency components. In other words, in solutions of embodiments of this application, the manner in which the terminal determines the direct current location information of the terminal based on the frequency component is clarified. This helps improve consistency between the terminal and the network-side device in understanding the direct current location information of the terminal.

### BRIEF DESCRIPTION OF THE DRAWINGS

FIG. 1 is a block diagram of a wireless communication system to which an embodiment of this application is applicable;
FIG. 2 is a diagram of a default direct current location according to an embodiment of this application;
FIG. 3 is a flowchart of an information transmission method according to an embodiment of this application;
FIG. 4 is a flowchart of another information transmission method according to an embodiment of this application;
FIG. 5 is a diagram of a structure of an information transmission apparatus according to an embodiment of this application;
FIG. 6 is a diagram of a structure of another information transmission apparatus according to an embodiment of this application;
FIG. 7 is a diagram of a structure of a communication device according to an embodiment of this application;
FIG. 8 is a diagram of a structure of a terminal according to an embodiment of this application; and
FIG. 9 is a diagram of a structure of a network-side device according to an embodiment of this application.

### DETAILED DESCRIPTION

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application fall within the protection scope of this application.

In the specification and claims of this application, the terms "first", "second", and the like are intended to distinguish similar objects, but are not necessarily used to describe a specific order or sequence. It should be understood that terms used in such a way are interchangeable in proper circumstances, so that embodiments of this application described herein can be implemented in an order different from the order illustrated or described herein. In addition, the objects distinguished by "first" and "second" are usually one category, and a quantity of objects is not limited. For example, the first object may be one or more. In addition, "and/or" used in this specification and the claims represents at least one of connected objects. The character "/" usually indicates an "or" relationship between associated objects.

It is worth noting that the technology described in embodiments of this application is not limited to being used in a long-term evolution (Long-Term Evolution, LTE)/LTE-advanced (LTE-Advanced, LTE-A) system, but may be used in another wireless communication system, for example, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency-division multiple access (Orthogonal Frequency-Division Multiple Access, OFDMA) system, a single carrier-frequency division multiple access (Single carrier-Frequency Division Multiple Access, SC-FDMA) system, and another system. The terms "system" and "network" are often interchangeably used in embodiments of this application, and the technology described may be used for both the system and radio technology mentioned above, and used for another system and radio technology. The following description describes a new radio (New Radio, NR) system for purposes of example, and the term of NR is used in most of the descriptions below, but these technologies are also applicable to an application beyond an NR system application, for example, a 6th generation (6^{th} Generation, 6G) communication system.

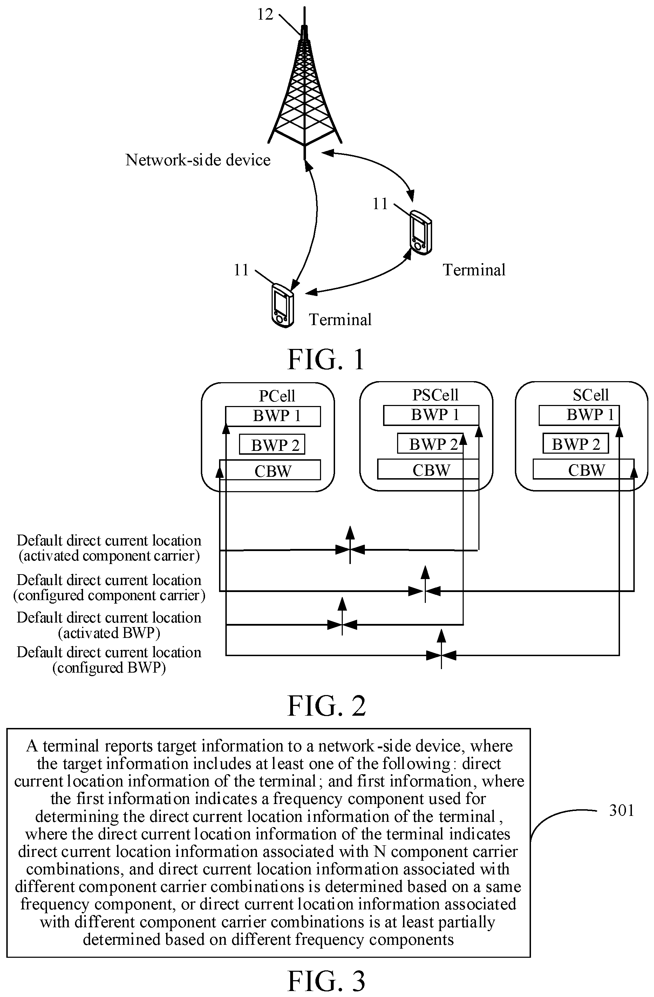

FIG. 1 is a block diagram of a wireless communication system to which an embodiment of this application is applicable. The wireless communication system includes a terminal 11 and a network-side device 12. The terminal 11 may be a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), a smart home appliance (home devices with a wireless communication function, such as a refrigerator, a television, a washing machine, furniture, and the like), a game console, a personal computer (Personal Computer, PC), a teller machine, a self-service machine, or another terminal-side device. The wearable device includes: a smart watch, a smart band, smart headphones, smart glasses, smart jewelry (a smart bangle, a smart bracelet, a smart ring, a smart necklace, a smart ankle bracelet, a smart anklet, and the like), a smart wristband, smart clothing, and the like. It should be noted that, a specific type of the terminal 11 is not limited in embodiments of this application. The network-side device 12 may include an access network device or a core network device. The access network device may alternatively be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or another proper term in the art. As long as the same technical effects are achieved, the base station is not limited to a specific technical term. It should be noted that, only a base station in an NR system is used as an example in embodiments of this application, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or an L-NEF), a binding support function (Binding Support Function, BSF), an application function (Application Function, AF), or the like. It needs to be noted that, only a core network device in an NR system is used as an example in embodiments of this application, and a specific type of the core network device is not limited.

For ease of understanding, some contents involved in embodiments of this application are described below.

### 1. Direct current location (Direct Current Location, DC Location) reporting cause

For a frequency range 1 (Frequency Range 1, FR 1), a terminal generally uses a zero-intermediate frequency architecture. This architecture is simple and easy to integrate, but also causes a significant problem of local oscillator leakage. An actual mixer has a specific port isolation design requirement, but a local oscillator component participating in frequency mixing is inevitably leaked to a radio frequency port of a transmit end. However, the local oscillator component is close to a signal spectrum and is difficult to be removed in a conventional filtering manner. The local oscillator forms a direct current component after down conversion at a receive end, resulting in problems such as constellation diagram offset and receiving performance degradation. Therefore, for a base station or a test device, an accurate spectral location of a local oscillator needs to be obtained and removed.

### 2. Default direct current location (Default DC Location, and may alternatively be referred to as Tx Direct Current Location)

The default direct current location is defined/calculated in the following manner:

A default direct current location of a terminal is always in the middle of a user equipment (User Equipment, UE) bandwidth (BandWidth), and the UE bandwidth may be a frequency between a lower edge of a lowest frequency and an upper edge of a highest frequency. The default direct current location may be determined based on a frequency component (frequency component). The frequency component is related to one of the following: (1) An uplink (Up Link, UL) frequency in the frequency component; (2) A downlink (Down Link, DL) frequency in the frequency component; and (3) An edge-most frequency in any uplink and downlink frequency component.

For example, as shown in FIG. 2, the default direct current location (that is, a location indicated by an arrow in FIG. 2) may be calculated based on the following frequency component:
1. Activated component carrier (Activated component carrier): performing calculation based on an activated component carrier (that is, based on only a channel bandwidth (Channel BandWidth, CBW) of a currently activated component carrier, that is, not considering deactivated secondary cells (Secondary Cell(s), Scells) and deactivated primary secondary cells (Primary Secondary Cell(s), PSCells));
2. Configured component carrier (Configured component carrier): performing calculation based on all configured component carriers (that is, based on CBWs of all configured component carriers, regardless of activated states);
3. Activated bandwidth part (Activated BandWidth Part, Activated BWP): performing calculation based on all activated BWPs (that is, only the activated BWP has impact on the calculation);
4. Configured BWP (that is, Configured BWP): performing calculation based on all configured BWPs (that is, based on a BWP of an allowed maximum possible BW).

### 3. DC location (that is, Tx Direct Current Location) reporting

To support a case that a quantity of component carriers (Component Carriers, CCs) configured for a terminal in intra-band (intra-band) carrier aggregation (Carrier Aggregation, CA) is greater than 2, the terminal reports a DC location to a network side. Optionally, the terminal may report an offset (offset) of a default direct current location.

The terminal reports the DC location based on a request from the network side. For an activated component carrier/BWP manner, DC location information (including an offset and other information, for example, a frequency component) associated with different activated/deactivated combination manners may be different. If the terminal reports DC location information of all combinations, in a case that a quantity of configured component carriers is greater than 2, signaling overheads may be large. In this case, the terminal may report only DC location information associated with a CC/BWP combination (combination) indicated by a network.

The information transmission method and the information transmission method according to embodiments of this application are described in detail below by using some embodiments and application scenarios thereof with reference to the accompanying drawings.

FIG. 3 is a flowchart of an information transmission method according to an embodiment of this application. The method may be performed by a terminal. As shown in FIG. 3, the method includes the following steps.

Step 301: A terminal reports target information to a network-side device, where the target information includes at least one of the following:
direct current location information of the terminal; and
first information, where the first information indicates a frequency component used for determining the direct current location information of the terminal.

The direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

In this embodiment, the direct current location information of the terminal indicates a direct current location of the terminal, and for example, may include the direct current location (DC Location) of the terminal, or may include an offset (offset) of the direct current location of the terminal relative to a default direct current location. In some optional embodiments, the terminal may report the direct current location information of the terminal in a case that two component carriers, one component carrier, or more than two component carriers are configured in intra-band carrier aggregation (intra-band CA). In addition, a granularity of the direct current location information of the terminal may be per component carrier group (per CC group).

The component carrier combination (CC combination) may alternatively be referred to as a BWP combination (BWP combination), or may alternatively be referred to as a CC/BWP combination. The frequency component may include, but is not limited to, an activated component carrier, a configured component carrier, an activated BWP, a configured BWP, or the like.

The component carrier combination may indicate at least one of a state of a component carrier in intra-band carrier aggregation (intra-band CA), an activated BWP index of a component carrier, and the like. The state of the component carrier may include an activated state of the component carrier and a deactivated state of the component carrier.

The N component carrier combinations may be N component carrier combinations requested or indicated by the network-side device in intra-band CA, or may be all component carrier combinations in intra-band CA, or may be N component carrier combinations selected by the terminal from intra-band CA. This is not limited in this embodiment.

The direct current location information associated with different component carrier combinations is determined based on a same frequency component. For example, in a case that N is greater than 1, the terminal may determine the direct current location information associated with the N component carrier combinations based on an activated component carrier; the terminal may determine the direct current location information associated with the N component carrier combinations based on a configured component carrier; the terminal may determine the direct current location information associated with the N component carrier combinations based on an activated BWP; or the terminal may determine the direct current location information associated with the N component carrier combinations based on a configured BWP. In some optional embodiments, the terminal may determine, based on a capability of the terminal, which frequency component is specifically used to determine the direct current location information associated with the N component carrier combinations.

The direct current location information associated with different component carrier combinations is at least partially determined based on different frequency components. For example, in an example in which N is 3, the terminal may determine direct current location information associated with a first component carrier combination in the N component carrier combinations based on an activated BWP; may determine direct current location information associated with a second component carrier combination in the N component carrier combinations based on a configured BWP; and may determine direct current location information associated with a third component carrier combination in the N component carrier combinations based on a configured component carrier. Alternatively, the terminal may determine, based on an activated BWP, direct current location information associated with a first component carrier combination and direct current location information associated with a second component carrier combination in the N component carrier combinations; and determine, based on a configured component carrier, direct current location information associated with a third component carrier combination in the N component carrier combinations, or the like.

According to the information transmission method provided in this embodiment of this application, the terminal reports at least one of the direct current location information of the terminal and the first information to the network-side device. The first information indicates the frequency component used for determining the direct current location information of the terminal, the direct current location information of the terminal indicates the direct current location information associated with the N component carrier combinations, and the direct current location information associated with different component carrier combinations is determined based on the same frequency component, or the direct current location information associated with different component carrier combinations is at least partially determined based on different frequency components. In other words, the terminal may determine the direct current location information associated with the N component carrier combinations based on the same frequency component, or the terminal may determine the direct current location information associated with at least partially different component carrier combinations in the N component carrier combinations based on different frequency components. In other words, in solutions of embodiments of this application, the manner in which the terminal determines the direct current location information of the terminal based on the frequency component is clarified. This helps improve consistency between the terminal and the network-side device in understanding the direct current location information of the terminal.

Optionally, the component carrier combination includes at least one of the following:
a BWP index of a component carrier in intra-band carrier aggregation; and
a state of a component carrier in intra-band carrier aggregation.

The state of the component carrier includes an activated state or a deactivated state, and the BWP index includes an activated BWP index in an activated component carrier.

In this embodiment, the component carrier in intra-band carrier aggregation (intra-band CA) includes at least one of an uplink component carrier and a downlink component carrier.

For example, the intra-band CA includes three CCs, namely, a CC 1, a CC 2, and a CC 3, each CC includes four BWPs, and the N component carrier combinations include a Comb 1, a Comb 2, a Comb 3, a Comb 4, and a Comb 5.
Comb 1 = {BWP₁₁, BWP₂₁}, indicating that the CC 1 activates the BWP₁₁, the CC 2 activates the BWP₂₁, and the CC 3 is deactivated;
Comb 2 = {BWP₁₃, BWP₂₂}, indicating that the CC 1 activates the BWP₁₃, the CC 2 activates the BWP₂₂, and the CC 3 is deactivated;
Comb 3 = {BWP₂₃}, indicating that the CC 1 is deactivated, the CC 2 activates the BWP₂₃, and the CC 3 is deactivated;
Comb 4 = {BWP₃₄}, indicating that the CC 1 is deactivated, the CC 2 is deactivated, and the CC 3 activates the BWP₃₄;
Comb 5 = {BWP₁₁, BWP₂₁, BWP₃₃}, indicating that the CC 1 activates the BWP₁₁, the CC 2 activates the BWP₂₁, and the CC 3 activates the BWP₃₃.

Optionally, in a case that the direct current location information associated with different component carrier combinations is determined based on a first frequency component, the first information includes the first frequency component; and
the direct current location information of the terminal includes one of the following:
a first offset; and
a first list, where the first list includes at least one first offset, where
the first offset is an offset between a direct current location of the terminal and a first default direct current location, and the first default direct current location is determined based on the first frequency component.

In this embodiment, the first default direct current location may be a default direct current location (Default DC Location) determined by the terminal based on the first frequency component.

Optionally, the first frequency component includes one of the following:
a configured component carrier; and
a configured BWP.

The configured component carrier may be understood as a configured component carrier (Configured Component Carrier), and the configured BWP may be understood as a configured BWP (Configured BWP).

Optionally, in a case that the direct current location information of the terminal includes the first offset, the direct current location information associated with the N component carrier combinations is the first offset; or
in a case that the direct current location information of the terminal includes the first list, an n^{th} element in the first list indicates direct current location information associated with an n^{th} component carrier combination in the N component carrier combinations, and n is a positive integer.

In this embodiment, in a case that the direct current location information of the terminal includes the first offset, the direct current location information associated with the N component carrier combinations is a same offset, that is, the first offset. In other words, the N component carrier combinations share the first offset, so that signaling overheads for reporting the direct current location information can be reduced. For example, in a case that the N component carrier combinations include a Comb 1, a Comb 2, a Comb 3, a Comb 4, and a Comb 5, direct current location information associated with the Comb 1, the Comb 2, the Comb 3, the Comb 4, and the Comb 5 is the first offset.

In a case that the direct current location information of the terminal includes the first list, the n^{th} element in the first list indicates the direct current location information associated with the n^{th} component carrier combination in the N component carrier combinations. In other words, elements in the first list are in one-to-one mapping with component carrier combinations in the N component carrier combinations in sequence. In this way, the network-side device can learn of the associated component carrier combinations based on locations of the elements in the first list, and there is no need to additionally indicate an association relationship between each element and each component carrier combination.

For example, the N component carrier combinations = {Comb 1, Comb 2, Comb 3, Comb 4, Comb 5}, and the first list = {offset 1, offset 2, offset 3, offset 4, offset 5}. In this case, the offset 1, the offset 2, the offset 3, the offset 4, and the offset 5 correspond to the Comb 1, the Comb 2, the Comb 3, the Comb 4, and the Comb 5 in sequence. To be specific, the offset 1 is direct current location information associated with the Comb 1, the offset 2 is direct current location information associated with the Comb 2, the offset 3 is direct current location information associated with the Comb 3, the offset 4 is direct current location information associated with the Comb 4, and the offset 5 is direct current location information associated with the Comb 5.

It may be understood that, in a case that the first frequency component is a configured component carrier or a configured BWP, values of non-null elements in the first list are the same (that is, the first offset). For example, values of the offset 1, the offset 2, the offset 3, the offset 4, and the offset 5 are the same.

Optionally, in a case that a value of the n^{th} element is null, an m^{th} element in the first list indicates the direct current location information associated with the n^{th} component carrier combination, where a value of the m^{th} element in the first list is not null, and m and n are different positive integers.

The values of m and n may be predefined in a protocol, indicated by the network-side device, determined by the terminal, or the like. This is not limited in this embodiment.

Specifically, in a case that the network-side device determines that the value of the n^{th} element in the first list is null, the network-side device may determine the direct current location information associated with the n^{th} component carrier combination based on the m^{th} element in the first list.

Optionally, in a case that a value of the n^{th} element is null, an i^{th} element in the first list indicates the direct current location information associated with the n^{th} component carrier combination, where
a state of a component carrier indicated by an i^{th} component carrier combination in the N component carrier combinations is the same as a state of a component carrier indicated by the n^{th} component carrier combination, and i and n are different positive integers.

A value of the i^{th} element is not null. The elements in the first list are in one-to-one mapping with the component carrier combinations in the N component carrier combinations in sequence. In other words, the i^{th} element in the first list indicates the direct current location information associated with the i^{th} component carrier combination, and the n^{th} element in the first list indicates the direct current location information associated with the n^{th} component carrier combination.

A state of a component carrier indicated by the i^{th} component carrier combination is the same as a state of a component carrier indicated by the n^{th} component carrier combination. For example, in a case that the intra-band CA includes a CC 1, a CC 2, and a CC 3, the state of the component carrier indicated by the i^{th} component carrier combination is: the CC 1 is activated, the CC 2 is activated, and the CC 3 is deactivated; and the state of the component carrier indicated by the n^{th} component carrier combination is also: the CC 1 is activated, the CC 2 is activated, and the CC 3 is deactivated. In other words, regardless of whether activated BWP indexes in activated component carriers are the same, as long as activated and deactivated component carriers are the same, the states of the component carriers are the same.

Specifically, in a case that the network-side device determines that the value of the n^{th} element in the first list is null, the network-side device may obtain a component carrier combination (that is, the i^{th} component carrier combination) that is in the N component carrier combinations and that shares a same state as a state of a component carrier indicated by the n^{th} component carrier combination, and may further determine the direct current location information associated with the n^{th} component carrier combination based on an element (that is, the i^{th} element) associated with the component carrier combination in the first list.

Optionally, in a case that the direct current location information corresponding to different component carrier combinations is determined based on a second frequency component, the first information includes the second frequency component; and
the direct current location information of the terminal includes a second list, and the second list includes at least one second offset.

In this embodiment, the second offset may be determined based on the second frequency component, and the second frequency component may be different from the first frequency component.

Optionally, the second frequency component includes one of the following:
an activated component carrier; and
an activated BWP.

The activated component carrier may be understood as an activated component carrier (Activated Component Carrier), and the activated BWP may be understood as an activated BWP (Activated BWP).

Optionally, a k^{th} second offset in the at least one second offset is an offset between a direct current location of the terminal and a k^{th} second default direct current location, the k^{th} second default direct current location is determined based on the second frequency component, the k^{th} second default direct current location is associated with a k^{th} component carrier combination in the N component carrier combinations, and k is a positive integer.

For example, in a case that a value of a k^{th} element in the second list is not null, the value of the k^{th} element in the second list (that is, the second offset) may be an offset between a direct current location of the terminal and the k^{th} second default direct current location, and the k^{th} second default direct current location may be determined based on an activated component carrier or an activated BWP indicated by the k^{th} component carrier combination.

Optionally, the k^{th} element in the second list indicates direct current location information associated with the k^{th} component carrier combination in the N component carrier combinations.

The k^{th} element in the second list indicates the direct current location information associated with the k^{th} component carrier combination in the N component carrier combinations. In other words, elements in the second list are in one-to-one mapping with component carrier combinations in the N component carrier combinations in sequence. In this way, the network-side device can learn of the associated component carrier combinations based on locations of the elements in the second list, and there is no need to additionally indicate an association relationship between each element and each component carrier combination.

For example, the N component carrier combinations = {Comb 1, Comb 2, Comb 3, Comb 4, Comb 5}, and the second list = {offset 1, offset 2, offset 3, offset 4, offset 5}. In this case, the offset 1, the offset 2, the offset 3, the offset 4, and the offset 5 correspond to the Comb 1, the Comb 2, the Comb 3, the Comb 4, and the Comb 5 in sequence. To be specific, the offset 1 is direct current location information associated with the Comb 1, the offset 2 is direct current location information associated with the Comb 2, the offset 3 is direct current location information associated with the Comb 3, the offset 4 is direct current location information associated with the Comb 4, and the offset 5 is direct current location information associated with the Comb 5.

Optionally, in a case that the second frequency component is an activated component carrier and a value of the k^{th} element is null, an x^{th} element in the second list indicates the direct current location information associated with the k^{th} component carrier combination in the N component carrier combinations, where a state of a component carrier indicated by the k^{th} component carrier combination is the same as a state of a component carrier indicated by an x^{th} component carrier combination in the N component carrier combinations, and x and k are different positive integers.

A value of the x^{th} element is not null. The elements in the second list are in one-to-one mapping with the component carrier combinations in the N component carrier combinations in sequence. In other words, the k^{th} element in the second list indicates the direct current location information associated with the k^{th} component carrier combination, and the x^{th} element in the first list indicates the direct current location information associated with the x^{th} component carrier combination.

A state of a component carrier indicated by the x^{th} component carrier combination is the same as a state of a component carrier indicated by the k^{th} component carrier combination. For example, in a case that the intra-band CA includes a CC 1, a CC 2, and a CC 3, the state of the component carrier indicated by the x^{th} component carrier combination is: the CC 1 is deactivated, the CC 2 is activated, and the CC 3 is activated; and the state of the component carrier indicated by the k^{th} component carrier combination is also: the CC 1 is deactivated, the CC 2 is activated, and the CC 3 is activated.

Specifically, in a case that the network-side device determines that the value of the k^{th} element in the second list is null, the network-side device may obtain a component carrier combination (that is, the x^{th} component carrier combination) that is in the N component carrier combinations and that shares a same state as a state of a component carrier indicated by the k^{th} component carrier combination, and may further determine the direct current location information associated with the k^{th} component carrier combination based on an element (that is, the i^{th} element) associated with the component carrier combination in the second list.

It should be noted that, in a case that the state of the component carrier indicated by the k^{th} component carrier combination is the same as the state of the component carrier indicated by the x^{th} component carrier combination in the N component carrier combinations, the x^{th} element in the second list may indicate the direct current location information associated with the k^{th} component carrier combination in the N component carrier combinations. In this case, a BWP index of an activated component carrier may not be considered.

Optionally, in a case that the direct current location information associated with different component carrier combinations is at least partially determined based on different frequency components, the first information includes one of the following:
a third list, where the third list includes at least one frequency component; and
a third frequency component, where the third frequency component includes one of the following: an activated component carrier, an activated BWP, a configured component carrier, and a configured BWP.

For example, the at least one frequency component may include at least some frequency components used for determining the direct current location information of the terminal. The third frequency component may be any one of the frequency components used for determining the direct current location information of the terminal or a frequency component with a smallest granularity. For example, in a case that all the frequency components used for determining the direct current location information of the terminal include a configured BWP and an activated BWP, the third frequency component may be the activated BWP.

In some optional embodiments, in a case that the direct current location information associated with different component carrier combinations is at least partially determined based on different frequency components, the terminal may report the frequency components based on a granularity of per component carrier combination, that is, a granularity of the frequency component reported by the terminal is per CC combination (per CC combination). In this case, the first information may include the third list. Alternatively, the terminal may report the frequency component based on a granularity of per component carrier group (CC group). In other words, a granularity of the frequency component reported by the terminal is per CC group (per CC group). In this case, the first information may include the third frequency component. In some optional embodiments, in a case that the terminal may report the frequency component based on the granularity of per component carrier group (CC group), the third frequency component may be a frequency component with a smallest granularity among all the frequency components used for determining the direct current location information of the terminal, or the third frequency component may be any frequency component among all the frequency components used for determining the direct current location information of the terminal.

Optionally, in a case that the direct current location information corresponding to different component carrier combinations is at least partially determined based on different frequency components, the direct current location information of the terminal includes a fourth list, where the fourth list includes at least one third offset; and

a p^{th} third offset in the at least one third offset is an offset between a direct current location of the terminal and a p^{th} third default direct current location, the p^{th} third default direct current location is associated with a p^{th} component carrier combination in the N component carrier combinations, and p is a positive integer.

For example, in a case that the p^{th} third default direct current location is determined based on an activated BWP or an activated component carrier, the p^{th} third default direct current location may be calculated based on the activated BWP or the activated component carrier indicated by the pth component carrier combination. In a case that the p^{th} third default direct current location is determined based on a configured BWP or a configured component carrier, the p^{th} third default direct current location may be calculated based on the configured BWP or the configured component carrier associated with the p^{th} component carrier combination. It should be noted that, component carrier combinations in a same component carrier group is associated with the same configured BWP or configured component carrier, that is, a BWP or a component carrier configured for the terminal.

Optionally, in a case that the first information includes the third list, the terminal determines that a frequency component used by first direct current location information is a frequency component indicated by an s^{th} element in the third list, where the first direct current location information is direct current location information associated with an s^{th} component carrier combination in the N component carrier combinations, and s is a positive integer; and/or
in a case that the first information includes the third frequency component, the terminal determines that the frequency component used by the direct current location information of the terminal is the third frequency component.

In this embodiment, in a case that the first information includes the third list, the terminal determines that the frequency component used by the first direct current location information is the frequency component indicated by the s^{th} element in the third list. In other words, each element in the third list correspond to each component carrier combination in the N component carrier combinations in sequence. For example, the N component carrier combinations = {Comb 1, Comb 2, Comb 3, Comb 4, Comb 5}, and the third list = {frequency component 1, frequency component 2, frequency component 1, frequency component 3, frequency component 1}. In this case, direct current location information associated with the Comb 1 is determined based on the frequency component 1, direct current location information associated with the Comb 2 is determined based on the frequency component 2, direct current location information associated with the Comb 3 is determined based on the frequency component 1, direct current location information associated with the Comb 4 is determined based on the frequency component 3, and direct current location information associated with the Comb 5 is determined based on the frequency component 1.

In some optional embodiments, in a case that the first information includes the third frequency component, the third frequency component may be any one of the frequency components used by the terminal to determine the direct current location information of the terminal. It should be noted that, for a specific component carrier combination, in a case that a frequency component used by the terminal to calculate an associated offset is different from the frequency component reported by the terminal, the terminal may adjust the reported offset associated with the component carrier combination to an offset that is calculated based on the frequency component reported by the terminal. For example, for a specific component carrier combination, in a case that the terminal uses an activated CC to calculate the default DC location, and the frequency component reported by the terminal is a configured CC, the terminal may adjust the reported offset associated with the component carrier combination to an offset between the direct current location of the terminal and the default DC location that is calculated based on the configured CC.

Optionally, a p^{th} element in the fourth list indicates direct current location information associated with the p^{th} component carrier combination.

The p^{th} element in the fourth list indicates the direct current location information associated with the p^{th} component carrier combination in the N component carrier combinations. In other words, elements in the fourth list are in one-to-one mapping with component carrier combinations in the N component carrier combinations in sequence. In this way, the network-side device can learn of the associated component carrier combinations based on locations of the elements in the fourth list, and there is no need to additionally indicate an association relationship between each element and each component carrier combination.

For example, the N component carrier combinations = {Comb 1, Comb 2, Comb 3, Comb 4, Comb 5}, and the fourth list = {offset 1, offset 2, offset 3, offset 4, offset 5}. In this case, the offset 1, the offset 2, the offset 3, the offset 4, and the offset 5 correspond to the Comb 1, the Comb 2, the Comb 3, the Comb 4, and the Comb 5 in sequence. To be specific, the offset 1 is direct current location information associated with the Comb 1, the offset 2 is direct current location information associated with the Comb 2, the offset 3 is direct current location information associated with the Comb 3, the offset 4 is direct current location information associated with the Comb 4, and the offset 5 is direct current location information associated with the Comb 5.

Optionally, in a case that the first information includes the third frequency component, the third frequency component is the activated component carrier, and a value of the p^{th} element in the fourth list is null, a y^{th} element in the fourth list indicates the direct current location information associated with the p^{th} component carrier combination, where a state of a component carrier indicated by the p^{th} component carrier combination is the same as a state of a component carrier indicated by a y^{th} component carrier combination in the N component carrier combinations, and y and p are different positive integers.

In this embodiment, a value of the y^{th} element is not null. In a case that the state of the component carrier indicated by the p^{th} component carrier combination is the same as the state of the component carrier indicated by the y^{th} component carrier combination, the y^{th} component carrier combination and the p^{th} component carrier combination may be associated with the same direct current location information. Specifically, in a case that the network-side device determines that the value of the p^{th} element in the fourth list is null, the network-side device may obtain a component carrier combination (that is, the y^{th} component carrier combination) that is in the N component carrier combinations and that shares a same state as a state of a component carrier indicated by the p^{th} component carrier combination, and may further determine the direct current location information associated with the p^{th} component carrier combination based on an element (that is, the y^{th} element) associated with the component carrier combination in the fourth list.

Optionally, in a case that the first information includes the third list, a p^{th} element in the third list is a fourth frequency component, and the value of the p^{th} element in the fourth list is null, an l^{th} element in the fourth list indicates the direct current location information associated with the p^{th} component carrier combination, where an l^{th} element in the third list is the fourth frequency component, l and p are different positive integers, and a type of the fourth frequency component includes a configured component carrier or a configured BWP.

In this embodiment, a value of the l^{th} element is not null. In a case that a frequency component associated with the l^{th} component carrier combination is the same as a frequency component associated with the p^{th} component carrier combination and the frequency component is a configured component carrier or a configured BWP, the l^{th} component carrier combination and the p^{th} component carrier combination may be associated with the same direct current location information. Specifically, in a case that the network-side device determines that the value of the p^{th} element in the fourth list is null, the network-side device may obtain a component carrier combination (that is, the l^{th} component carrier combination) that is in the N component carrier combinations and that has a same frequency component associated with the p^{th} component carrier combination as the configured component carrier or the configured BWP, and may further determine the direct current location information associated with the p^{th} component carrier combination based on an element (that is, the l^{th} element) associated with the component carrier combination in the fourth list.

It may be understood that, each element in the third list or each element in the fourth list and each of the N component carrier combinations may correspond to each other in sequence.

Optionally, before the terminal reports the target information to the network-side device, the method further includes:
the terminal receives a first configuration from the network-side device, where the first configuration includes at least one of the following:
the N component carrier combinations; and
at least one cell index.

In this embodiment, the at least one cell index may indicate a component carrier in intra-band carrier aggregation.

In an optional embodiment, the intra-band carrier aggregation may be intra-band contiguous carrier aggregation (intra-band contiguous CA). In this case, the component carrier combination may indicate states of contiguous component carriers. Alternatively, the intra-band carrier aggregation may be intra-band non-contiguous carrier aggregation (intra-band non-contiguous CA). In this case, the component carrier combination may only indicate states of contiguous component carriers. For example, one intra-band includes a CC 1, a CC 2, a CC 3, a CC 4, and a CC 5. The CC 1, the CC 2, and the CC 3 are contiguous, and the CC 4 and the CC 5 are contiguous, but the CC 1, the CC 2, and the CC 3, and the CC 4 and the CC 5 are non-contiguous. In this case, the component carrier combination may only indicate states of the CC 1, the CC 2, and the CC 3, or indicate states of the CC 4 and the CC 5. Alternatively, the component carrier combination may indicate states of non-contiguous component carriers. For example, the component carrier combination may indicate states of the CC 1, the CC 2, and the CC 3, and the CC 4 and the CC 5.

In some optional embodiments, the at least one cell index may be located in a fifth list. For example, in a case that the intra-band CA includes the CC 1, the CC 2, and the CC 3, the fifth list may be: {CellIndex1, CellIndex2, CellIndex3}. In addition, elements in the fifth list may be in one-to-one mapping with component carriers in the component carrier combination in sequence.

In some optional embodiments, the first configuration may further include first indication information. The first indication information indicates whether to enable the terminal to report the target information. In a case that the first indication information indicates to enable the terminal to report the target information, the terminal may report the target information. Otherwise, the terminal does not report the target information.

It may be understood that, in a case that the first configuration does not include the first indication information, but includes the N component carrier combinations and/or the at least one cell index, it may be understood that the network implicitly enables the terminal to report the target information.

Optionally, before the terminal reports the target information to the network-side device, the method further includes:
the terminal receives L second configurations from the network-side device, where
the second configuration includes at least one of the following:
at least one component carrier combination; and
at least one cell index, where the at least one cell index indicates a component carrier in one component carrier set, where
the N component carrier combinations are determined based on the L second configurations, and L is a positive integer.

The component carriers in the component carrier set may be contiguous component carriers. For example, component carriers in intra-band contiguous carrier aggregation may be divided into a plurality of component carrier sets, where component carriers in each component carrier set are contiguous, and component carriers in different component carrier sets are also contiguous. Alternatively, component carriers in intra-band non-contiguous carrier aggregation may be divided into a plurality of component carrier sets, where component carriers in each component carrier set are contiguous, and component carriers in different component carrier sets are non-contiguous. For example, one intra-band includes a CC 1, a CC 2, a CC 3, a CC 4, and a CC 5. The CC 1, the CC 2, and the CC 3 are contiguous, and the CC 4 and the CC 5 are contiguous, but the CC 1, the CC 2, and the CC 3, and the CC 4 and the CC 5 are non-contiguous. In this case, the CC 1, the CC 2, and the CC 3 may be grouped into one component carrier set, and the CC 4 and the CC 5 may be grouped into another component carrier set.

The L second configurations may correspond to L component carrier sets, and a component carrier combination in each second configuration indicates a state of each component carrier in a corresponding component carrier set. For example, the L second configurations include a second configuration 1 and a second configuration 2. The second configuration 1 corresponds to a component carrier set 1, the second configuration 2 corresponds to a component carrier set 2, the component carrier set 1 includes a CC 1, a CC 2, and a CC 3, and the second set 2 includes a CC 4 and a CC 5. Therefore, component carrier combinations in the second configuration 1 indicate states of the CC 1, the CC 2, and the CC 3, and component carrier combinations in the second configuration 2 indicate states of the CC 4 and the CC 5.

The N component carrier combinations are determined based on the L second configurations. For example, in a case that component carriers indicated by the L second configurations include all component carriers in a component carrier group, the component carrier combinations of the L second configurations may be combined to obtain the N component carrier combinations. For example, one component carrier group includes a CC 1, a CC 2, a CC 3, a CC 4, and a CC 5, where a component carrier set 1 includes the CC 1, the CC 2, and the CC 3, a second set 2 includes the CC 4 and the CC 5, the second configuration 1 corresponds to the component carrier set 1, the second configuration 2 corresponds to the component carrier set 2, the second configuration 1 includes a Comb 11 and a Comb 21, and the second configuration 2 includes a Comb 21 and a Comb 22.
Comb 11 = {BWP 11, BWP 21}, indicating that the CC 1 activates the BWP 11, the CC 2 activates the BWP 21, and the CC 3 is deactivated;
Comb 12 = {BWP 13, BWP 22}, indicating that the CC 1 activates the BWP 13, the CC 2 activates the BWP 22, and the CC 3 is deactivated;
Comb 21 = {BWP 43, BWP 51}, indicating that the CC 4 activates the BWP 41, and the CC 5 activates the BWP 51;
Comb 22 = {BWP 42}, indicating that the CC 4 activates the BWP 42, and the CC 5 is deactivated.

The Comb 11 and the Comb 21 and the Comb 21 and the Comb 22 are combined to obtain:
Comb 1 = {BWP 11, BWP 21, BWP 43, BWP 51}, indicating that the CC 1 activates the BWP 11, the CC 2 activates the BWP 21, the CC 3 is deactivated, the CC 4 activates the BWP 41, and the CC 5 activates the BWP 51;
Comb 2 = {BWP 11, BWP 21, BWP 42}, indicating that the CC 1 activates the BWP 11, the CC 2 activates the BWP 21, the CC 3 is deactivated, the CC 4 activates the BWP 42, and the CC 5 is deactivated;
Comb 3 = {BWP 13, BWP 22, BWP 43, BWP 51}, indicating that the CC 1 activates the BWP 13, the CC 2 activates the BWP 22, the CC 3 is deactivated, the CC 4 activates the BWP 41, and the CC 5 activates the BWP 51;
Comb 4 = {BWP 13, BWP 22, BWP 42}, indicating that the CC 1 activates the BWP 13, the CC 2 activates the BWP 22, the CC 3 is deactivated, the CC 4 activates the BWP 42, and the CC 5 is deactivated.

The N component carrier combinations are the Comb 1, the Comb 2, the Comb 3, and the Comb 4.

Optionally, in a case that component carrier combinations included in the L second configurations are not related to a first component carrier, the method further includes one of the following:

the terminal determines the N component carrier combinations based on the component carrier combinations included in the L second configurations and a first state of the first component carrier, where the first state is a deactivated state; and
the terminal determines the N component carrier combinations based on the component carrier combinations included in the L second configurations and a first component carrier combination, where the first component carrier combination includes all component carrier combinations related to the first component carrier, where
component carriers indicated by the L second configurations and the first component carrier are located in a same component carrier group.

The component carrier combinations included in the L second configurations are not related to the first component carrier. For example, none of the component carrier combinations included in the L second configurations indicates a state of the first component carrier. The first component carrier may include all component carriers in the component carrier group other than component carriers indicated by the L second configurations. The first component carrier combination includes all component carrier combinations related to the first component carrier. For example, the first component carrier includes a CC 4 and a CC 5, and both the CC 4 and the CC 5 include two BWPs. In this case, the component carrier combinations related to the first component carrier may include eight component carrier combinations, that is, {BWP 41}, {BWP 42}, {BWP 51}, {BWP 52}, {BWP 41, BWP 51}, {BWP 41, BWP 52}, {BWP 42, BWP 51}, and {BWP 42, BWP 52}.

For example, one component carrier group includes a CC 1, a CC 2, a CC 3, a CC 4, and a CC 5, where a component carrier set 1 includes the CC 1, the CC 2, and the CC 3, a second configuration 1 corresponds to the component carrier set 1, and the second configuration 1 includes a Comb 11 and a Comb 21.
Comb 11 = {BWP 11, BWP 21}, indicating that the CC 1 activates the BWP 11, the CC 2 activates the BWP 21, and the CC 3 is deactivated;
Comb 12 = {BWP 13, BWP 22}, indicating that the CC 1 activates the BWP 13, the CC 2 activates the BWP 22, and the CC 3 is deactivated;
Manner 1: The Comb 11, the Comb 21, and the first state of the first component carrier are combined. For example, the first state may be the deactivated state.
Comb 1 = {BWP 11, BWP 21}, indicating that the CC 1 activates the BWP 11, the CC 2 activates the BWP 21, the CC 3 is deactivated, the CC 4 is deactivated, and the CC 5 is deactivated;
Comb 2 = {BWP 13, BWP 22}, indicating that the CC 1 activates the BWP 13, the CC 2 activates the BWP 22, the CC 3 is deactivated, the CC 4 is deactivated, and the CC 5 is deactivated.

The N component carrier combinations are the Comb 1 and the Comb 2.

Manner 2: The Comb 11, the Comb 21, and the first component carrier combination are combined, to obtain the N component carrier combinations. For a specific combination manner, refer to a combination manner between the Comb 11 and the Comb 21, and the Comb 21 and the Comb 22. Details are not described again in this embodiment.

Optionally, the method further includes:
the terminal reports the N component carrier combinations to the network-side device.

In this embodiment, in a case that the N component carrier combinations are determined based on the L second configurations, the terminal may report the N component carrier combinations to the network-side device.

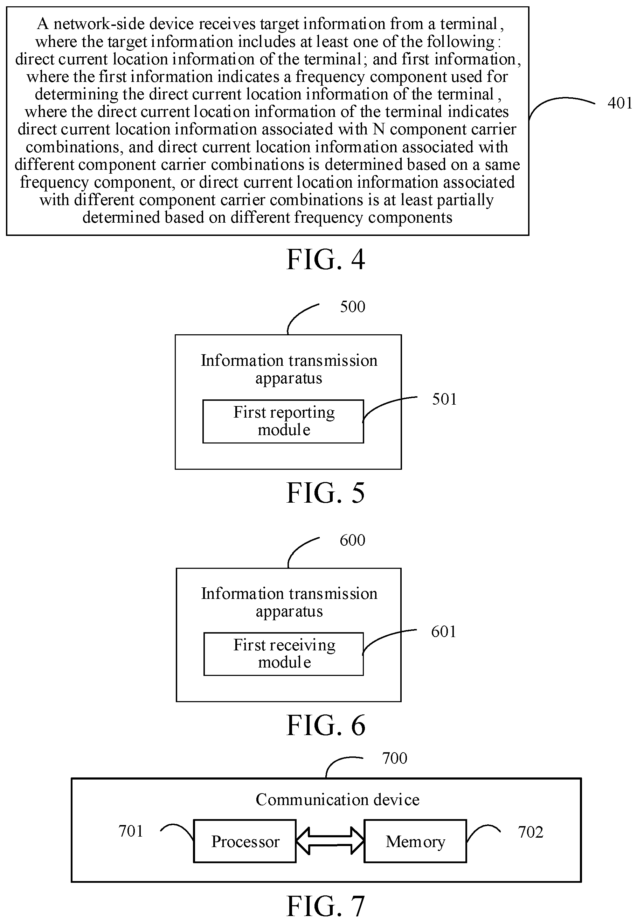

FIG. 4 is a flowchart of an information transmission method according to an embodiment of this application. The method may be performed by a network-side device. As shown in FIG. 4, the method includes the following steps.

Step 401: A network-side device receives target information from a terminal, where the target information includes at least one of the following:
direct current location information of the terminal; and
first information, where the first information indicates a frequency component used for determining the direct current location information of the terminal.

The direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

For the target information, refer to related descriptions in embodiments described above. Details are not described herein again.

It should be noted that, after receiving the target information, the network-side device may determine a direct current location of the terminal based on the target information. For example, the network-side device may calculate a default direct current location (Default DC Location) based on the frequency component indicated by the first information, and determine the direct current location of the terminal based on the calculated default direct current location and an offset indicated by the direct current location information of the terminal.

Optionally, the component carrier combination includes at least one of the following:
a BWP index of a component carrier in intra-band carrier aggregation; and
a state of a component carrier in intra-band carrier aggregation.

The state of the component carrier includes an activated state or a deactivated state, and the BWP index includes an activated BWP index in an activated component carrier.

Optionally, in a case that the direct current location information associated with different component carrier combinations is determined based on a first frequency component, the first information includes the first frequency component; and the direct current location information of the terminal includes one of the following:
a first offset; and
a first list, where the first list includes at least one first offset, where
the first offset is an offset between a direct current location of the terminal and a first default direct current location, and the first default direct current location is determined based on the first frequency component.

Optionally, the first frequency component includes one of the following:
a configured component carrier; and
a configured BWP.

Optionally, in a case that the direct current location information of the terminal includes the first offset, the direct current location information associated with the N component carrier combinations is the first offset; or
in a case that the direct current location information of the terminal includes the first list, an n^{th} element in the first list indicates direct current location information associated with an n^{th} component carrier combination in the N component carrier combinations, and n is a positive integer.

Optionally, in a case that a value of the n^{th} element is null, an m^{th} element in the first list indicates the direct current location information associated with the n^{th} component carrier combination, where a value of the m^{th} element in the first list is not null, and m and n are different positive integers.

Optionally, in a case that a value of the n^{th} element is null, an i^{th} element in the first list indicates the direct current location information associated with the n^{th} component carrier combination, where
a state of a component carrier indicated by an i^{th} component carrier combination in the N component carrier combinations is the same as a state of a component carrier indicated by the n^{th} component carrier combination, and i and n are different positive integers.

Optionally, in a case that the direct current location information corresponding to different component carrier combinations is determined based on a second frequency component, the first information includes the second frequency component; and
the direct current location information of the terminal includes a second list, and the second list includes at least one second offset.

Optionally, the second frequency component includes one of the following:
an activated component carrier; and
an activated BWP.

Optionally, a k^{th} second offset in the at least one second offset is an offset between a direct current location of the terminal and a k^{th} second default direct current location, the k^{th} second default direct current location is determined based on the second frequency component, the k^{th} second default direct current location is associated with a k^{th} component carrier combination in the N component carrier combinations, and k is a positive integer.

Optionally, a k^{th} element in the second list indicates direct current location information associated with the k^{th} component carrier combination in the N component carrier combinations.

Optionally, in a case that the second frequency component is an activated component carrier and a value of the k^{th} element is null, an x^{th} element in the second list indicates the direct current location information associated with the k^{th} component carrier combination in the N component carrier combinations, where a state of a component carrier indicated by the k^{th} component carrier combination is the same as a state of a component carrier indicated by an x^{th} component carrier combination in the N component carrier combinations, and x and k are different positive integers.

Optionally, in a case that the direct current location information associated with different component carrier combinations is at least partially determined based on different frequency components, the first information includes one of the following:
a third list, where the third list includes at least one frequency component; and
a third frequency component, where the third frequency component includes one of the following: an activated component carrier, an activated BWP, a configured component carrier, and a configured BWP.

Optionally, in a case that the direct current location information corresponding to different component carrier combinations is at least partially determined based on different frequency components, the direct current location information of the terminal includes a fourth list, where the fourth list includes at least one third offset; and
a p^{th} third offset in the at least one third offset is an offset between a direct current location of the terminal and a p^{th} third default direct current location, the p^{th} third default direct current location is associated with a p^{th} component carrier combination in the N component carrier combinations, and p is a positive integer.

Optionally, in a case that the first information includes the third list, the terminal determines that a frequency component used by first direct current location information is a frequency component indicated by an s^{th} element in the third list, where the first direct current location information is direct current location information associated with an s^{th} component carrier combination in the N component carrier combinations, and s is a positive integer; and/or
in a case that the first information includes the third frequency component, the terminal determines that the frequency component used by the direct current location information of the terminal is the third frequency component.

Optionally, a p^{th} element in the fourth list indicates direct current location information associated with the p^{th} component carrier combination.

Optionally, in a case that the first information includes the third frequency component, the third frequency component is the activated component carrier, and a value of the p^{th} element in the fourth list is null, a y^{th} element in the fourth list indicates the direct current location information associated with the p^{th} component carrier combination, where a state of a component carrier indicated by the p^{th} component carrier combination is the same as a state of a component carrier indicated by a y^{th} component carrier combination in the N component carrier combinations, and y and p are different positive integers.

Optionally, in a case that the first information includes the third list, a p^{th} element in the third list is a fourth frequency component, and a value of the p^{th} element in the fourth list is null, an l^{th} element in the fourth list indicates the direct current location information associated with the p^{th} component carrier combination, where an l^{th} element in the third list is the fourth frequency component, l and p are different positive integers, and a type of the fourth frequency component includes a configured component carrier or a configured BWP.

Optionally, before the network-side device receives the target information from the terminal, the method further includes:
the network-side device sends a first configuration to the terminal, where the first configuration includes at least one of the following:
the N component carrier combinations; and
at least one cell index.

Optionally, before the network-side device receives the target information from the terminal, the method further includes:
the network-side device sends L second configurations to the terminal, where
the second configuration includes at least one of the following:
   at least one component carrier combination; and
   at least one cell index, where the at least one cell index indicates a component carrier in one component carrier set, where
   the N component carrier combinations are determined based on the L second configurations, and L is a positive integer.

Optionally, the method further includes:
the network-side device receives the N component carrier combinations from the terminal.

It should be noted that, for an implementation of this embodiment, refer to related descriptions in embodiment shown in FIG. 3. Details are not described herein again.

It should be noted that, the information transmission method provided in this embodiment of this application may be performed by the information transmission apparatus or a control module for performing the information transmission method in the information transmission apparatus. In embodiments of this application, the information transmission apparatus provided in embodiments of this application is described by using an example in which the information transmission apparatus performs the information transmission method.

FIG. 5 is a diagram of a structure of an information transmission apparatus according to an embodiment of this application. As shown in FIG. 5, the information transmission apparatus 500 includes:
a first reporting module 501, configured to report target information to a network-side device, where the target information includes at least one of the following:
direct current location information of a terminal; and
first information, where the first information indicates a frequency component used for determining the direct current location information of the terminal.

The direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

Optionally, the component carrier combination includes at least one of the following:
a BWP index of a component carrier in intra-band carrier aggregation; and
a state of a component carrier in intra-band carrier aggregation.

The state of the component carrier includes an activated state or a deactivated state, and the BWP index includes an activated BWP index in an activated component carrier.

Optionally, in a case that the direct current location information associated with different component carrier combinations is determined based on a first frequency component, the first information includes the first frequency component; and
the direct current location information of the terminal includes one of the following:
a first offset; and
a first list, where the first list includes at least one first offset, where
the first offset is an offset between a direct current location of the terminal and a first default direct current location, and the first default direct current location is determined based on the first frequency component.

Optionally, the first frequency component includes one of the following:
a configured component carrier; and
a configured BWP.

Optionally, in a case that the direct current location information of the terminal includes the first offset, the direct current location information associated with the N component carrier combinations is the first offset; or
in a case that the direct current location information of the terminal includes the first list, an n^{th} element in the first list indicates direct current location information associated with an n^{th} component carrier combination in the N component carrier combinations, and n is a positive integer.

Optionally, in a case that a value of the n^{th} element is null, an m^{th} element in the first list indicates the direct current location information associated with the n^{th} component carrier combination, where a value of the m^{th} element in the first list is not null, and m and n are different positive integers.

Optionally, in a case that a value of the n^{th} element is null, an i^{th} element in the first list indicates the direct current location information associated with the n^{th} component carrier combination, where
a state of a component carrier indicated by an i^{th} component carrier combination in the N component carrier combinations is the same as a state of a component carrier indicated by the n^{th} component carrier combination, and i and n are different positive integers.

Optionally, in a case that the direct current location information corresponding to different component carrier combinations is determined based on a second frequency component, the first information includes the second frequency component; and
the direct current location information of the terminal includes a second list, and the second list includes at least one second offset.

Optionally, the second frequency component includes one of the following:
an activated component carrier; and
an activated BWP.

Optionally, a k^{th} second offset in the at least one second offset is an offset between a direct current location of the terminal and a k^{th} second default direct current location, the k^{th} second default direct current location is determined based on the second frequency component, the k^{th} second default direct current location is associated with a k^{th} component carrier combination in the N component carrier combinations, and k is a positive integer.

Optionally, a k^{th} element in the second list indicates direct current location information associated with the k^{th} component carrier combination in the N component carrier combinations.

Optionally, in a case that the second frequency component is an activated component carrier and a value of the k^{th} element is null, an x^{th} element in the second list indicates the direct current location information associated with the k^{th} component carrier combination in the N component carrier combinations, where a state of a component carrier indicated by the k^{th} component carrier combination is the same as a state of a component carrier indicated by an x^{th} component carrier combination in the N component carrier combinations, and x and k are different positive integers.

Optionally, in a case that the direct current location information associated with different component carrier combinations is at least partially determined based on different frequency components, the first information includes one of the following:
a third list, where the third list includes at least one frequency component; and
a third frequency component, where the third frequency component includes one of the following: an activated component carrier, an activated BWP, a configured component carrier, and a configured BWP.

Optionally, in a case that the direct current location information corresponding to different component carrier combinations is at least partially determined based on different frequency components, the direct current location information of the terminal includes a fourth list, where the fourth list includes at least one third offset; and
a p^{th} third offset in the at least one third offset is an offset between a direct current location of the terminal and a p^{th} third default direct current location, the p^{th} third default direct current location is associated with a p^{th} component carrier combination in the N component carrier combinations, and p is a positive integer.

Optionally, in a case that the first information includes the third list, the terminal determines that a frequency component used by first direct current location information is a frequency component indicated by an s^{th} element in the third list, where the first direct current location information is direct current location information associated with an s^{th} component carrier combination in the N component carrier combinations, and s is a positive integer; and/or
in a case that the first information includes the third frequency component, the terminal determines that the frequency component used by the direct current location information of the terminal is the third frequency component.

Optionally, a p^{th} element in the fourth list indicates direct current location information associated with the p^{th} component carrier combination.

Optionally, in a case that the first information includes the third frequency component, the third frequency component is the activated component carrier, and a value of the p^{th} element in the fourth list is null, a y^{th} element in the fourth list indicates the direct current location information associated with the p^{th} component carrier combination, where a state of a component carrier indicated by the p^{th} component carrier combination is the same as a state of a component carrier indicated by a y^{th} component carrier combination in the N component carrier combinations, and y and p are different positive integers.

Optionally, in a case that the first information includes the third list, a p^{th} element in the third list is a fourth frequency component, and a value of the p^{th} element in the fourth list is null, an l^{th} element in the fourth list indicates the direct current location information associated with the p^{th} component carrier combination, where an l^{th} element in the third list is the fourth frequency component, l and p are different positive integers, and a type of the fourth frequency component includes a configured component carrier or a configured BWP.

Optionally, the apparatus further includes:
a first receiving module, configured to receive a first configuration from a network-side device before reporting the target information to the network-side device; and the first configuration includes at least one of the following:
the N component carrier combinations; and
at least one cell index.

Optionally, the apparatus further includes:
a second receiving module, configured to receive L second configurations from the network-side device before reporting the target information to the network-side device; and
the second configuration includes at least one of the following:
   at least one component carrier combination; and
   at least one cell index, where the at least one cell index indicates a component carrier in one component carrier set, where
   the N component carrier combinations are determined based on the L second configurations, and L is a positive integer.

Optionally, the apparatus further includes a determining module, where the determining module is specifically configured to perform one of the following:
in a case that component carrier combinations included in the L second configurations are not related to a first component carrier, determine the N component carrier combinations based on the component carrier combinations included in the L second configurations and a first state of the first component carrier, where the first state is a deactivated state; and
in a case that component carrier combinations included in the L second configurations are not related to a first component carrier, determine the N component carrier combinations based on the component carrier combinations included in the L second configurations and a first component carrier combination, where the first component carrier combination includes all component carrier combinations related to the first component carrier, where
component carriers indicated by the L second configurations and the first component carrier are located in a same component carrier group.

Optionally, the apparatus further includes:
a second reporting module, configured to report the N component carrier combinations to the network-side device.

The information transmission apparatus in embodiments of this application may be an electronic device, for example, an electronic device with an operating system, or may be a component in an electronic device, for example, an integrated circuit or a chip. The electronic device may be a terminal or another device other than a terminal. For example, the terminal may include, but is not limited to, the type of terminal 11 listed above, and the another device may be a server, a network attached storage (Network Attached Storage, NAS), or the like. This is not specifically limited in embodiments of this application.

The information transmission apparatus according to embodiments of this application may implement all processes implemented in the method embodiment in FIG. 3, and the same technical effects can be achieved. Details are not described herein again to avoid repetition.

FIG. 6 is a diagram of a structure of an information transmission apparatus according to an embodiment of this application. As shown in FIG. 6, the information transmission apparatus 600 includes:
a first receiving module 601, configured to receive target information from a terminal, where the target information includes at least one of the following:
direct current location information of the terminal; and
first information, where the first information indicates a frequency component used for determining the direct current location information of the terminal.

The direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

Optionally, the component carrier combination includes at least one of the following:
a BWP index of a component carrier in intra-band carrier aggregation; and
a state of a component carrier in intra-band carrier aggregation.

The state of the component carrier includes an activated state or a deactivated state, and the BWP index includes an activated BWP index in an activated component carrier.

Optionally, in a case that the direct current location information associated with different component carrier combinations is determined based on a first frequency component, the first information includes the first frequency component; and
the direct current location information of the terminal includes one of the following:
a first offset; and
a first list, where the first list includes at least one first offset, where
the first offset is an offset between a direct current location of the terminal and a first default direct current location, and the first default direct current location is determined based on the first frequency component.

Optionally, the first frequency component includes one of the following:
a configured component carrier; and
a configured BWP.

Optionally, in a case that the direct current location information of the terminal includes the first offset, the direct current location information associated with the N component carrier combinations is the first offset; or
in a case that the direct current location information of the terminal includes the first list, an n^{th} element in the first list indicates direct current location information associated with an n^{th} component carrier combination in the N component carrier combinations, and n is a positive integer.

Optionally, in a case that a value of the n^{th} element is null, an m^{th} element in the first list indicates the direct current location information associated with the n^{th} component carrier combination, where a value of the m^{th} element in the first list is not null, and m and n are different positive integers.

Optionally, in a case that a value of the n^{th} element is null, an i^{th} element in the first list indicates the direct current location information associated with the n^{th} component carrier combination, where
a state of a component carrier indicated by an i^{th} component carrier combination in the N component carrier combinations is the same as a state of a component carrier indicated by the n^{th} component carrier combination, and i and n are different positive integers.

Optionally, in a case that the direct current location information corresponding to different component carrier combinations is determined based on a second frequency component, the first information includes the second frequency component; and
the direct current location information of the terminal includes a second list, and the second list includes at least one second offset.

Optionally, the second frequency component includes one of the following:
an activated component carrier; and
an activated BWP.

Optionally, a k^{th} second offset in the at least one second offset is an offset between a direct current location of the terminal and a k^{th} second default direct current location, the k^{th} second default direct current location is determined based on the second frequency component, the k^{th} second default direct current location is associated with a k^{th} component carrier combination in the N component carrier combinations, and k is a positive integer.

Optionally, a k^{th} element in the second list indicates direct current location information associated with the k^{th} component carrier combination in the N component carrier combinations.

Optionally, in a case that the second frequency component is an activated component carrier and a value of the k^{th} element is null, an x^{th} element in the second list indicates the direct current location information associated with the k^{th} component carrier combination in the N component carrier combinations, where a state of a component carrier indicated by the k^{th} component carrier combination is the same as a state of a component carrier indicated by an x^{th} component carrier combination in the N component carrier combinations, and x and k are different positive integers.

Optionally, in a case that the direct current location information associated with different component carrier combinations is at least partially determined based on different frequency components, the first information includes one of the following:
a third list, where the third list includes at least one frequency component; and
a third frequency component, where the third frequency component includes one of the following: an activated component carrier, an activated BWP, a configured component carrier, and a configured BWP.

Optionally, in a case that the direct current location information corresponding to different component carrier combinations is at least partially determined based on different frequency components, the direct current location information of the terminal includes a fourth list, where the fourth list includes at least one third offset; and
a p^{th} third offset in the at least one third offset is an offset between a direct current location of the terminal and a p^{th} third default direct current location, the p^{th} third default direct current location is associated with a p^{th} component carrier combination in the N component carrier combinations, and p is a positive integer.

Optionally, in a case that the first information includes the third list, the terminal determines that a frequency component used by first direct current location information is a frequency component indicated by an s^{th} element in the third list, where the first direct current location information is direct current location information associated with an s^{th} component carrier combination in the N component carrier combinations, and s is a positive integer; and/or
in a case that the first information includes the third frequency component, the terminal determines that the frequency component used by the direct current location information of the terminal is the third frequency component.

Optionally, a p^{th} element in the fourth list indicates direct current location information associated with the p^{th} component carrier combination.

Optionally, in a case that the first information includes the third frequency component, the third frequency component is the activated component carrier, and a value of the p^{th} element in the fourth list is null, a y^{th} element in the fourth list indicates the direct current location information associated with the p^{th} component carrier combination, where a state of a component carrier indicated by the p^{th} component carrier combination is the same as a state of a component carrier indicated by a y^{th} component carrier combination in the N component carrier combinations, and y and p are different positive integers.

Optionally, in a case that the first information includes the third list, a p^{th} element in the third list is a fourth frequency component, and a value of the p^{th} element in the fourth list is null, an l^{th} element in the fourth list indicates the direct current location information associated with the p^{th} component carrier combination, where an l^{th} element in the third list is the fourth frequency component, l and p are different positive integers, and a type of the fourth frequency component includes a configured component carrier or a configured BWP.

Optionally, the apparatus further includes:
a first sending module, configured to send a first configuration to the terminal before receiving the target information from the terminal, where the first configuration includes at least one of the following:
the N component carrier combinations; and
at least one cell index.

Optionally, the apparatus further includes:
a second sending module, configured to send L second configurations to the terminal before receiving the target information from the terminal, where
the second configuration includes at least one of the following:
   at least one component carrier combination; and
   at least one cell index, where the at least one cell index indicates a component carrier in one component carrier set, where
   the N component carrier combinations are determined based on the L second configurations, and L is a positive integer.

Optionally, the apparatus further includes:
a second receiving module, configured to receive the N component carrier combinations from the terminal.

The information transmission apparatus in embodiments of this application may be an electronic device, for example, an electronic device with an operating system, or may be a component in an electronic device, for example, an integrated circuit or a chip. The electronic device may be a network-side device or another device other than a network-side device. For example, the network-side device may include, but is not limited to, the type of the network-side device 12 listed above, and the another device may be a server, a network attached storage (Network Attached Storage, NAS), or the like. This is not specifically limited in embodiments of this application.

The information transmission apparatus according to embodiments of this application may implement all processes implemented in the method embodiment in FIG. 4, and the same technical effects can be achieved. Details are not described herein again to avoid repetition.

Optionally, as shown in FIG. 7, an embodiment of this application further provides a communication device 700, including a processor 701 and a memory 702. The memory 702 stores a program and instructions that can be run on the processor 701. For example, when the communication device 700 is a terminal, and when the program or the instructions are executed by the processor 701, all steps of the information transmission method embodiment are implemented, and the same technical effects can be achieved. When the communication device 700 is a network-side device, and when the program or the instructions are executed by the processor 701, all steps of the information transmission method embodiment are implemented, and the same technical effects can be achieved. Details are not described herein again to avoid repetition.

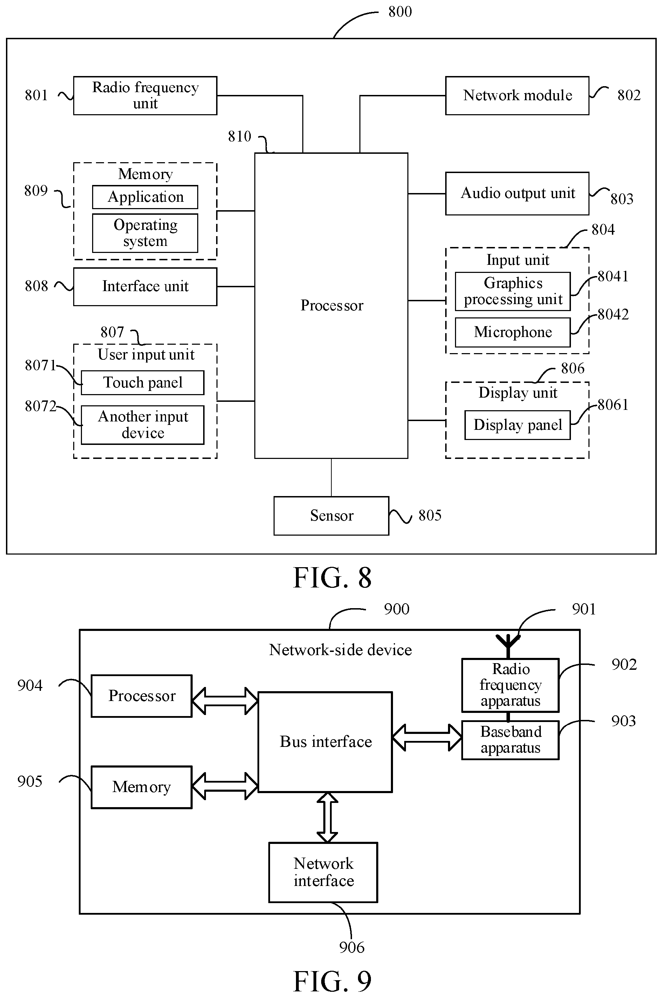

An embodiment of this application further provides a terminal, including a processor and a communication interface. The communication interface is configured to report target information to a network-side device, where the target information includes at least one of the following: direct current location information of the terminal; and first information, where the first information indicates a frequency component used for determining the direct current location information of the terminal. The direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer. The terminal embodiment corresponds to the terminal-side method embodiment described above, and each implementation process and implementation of the method embodiment described above may be used in the terminal embodiment, and the same technical effects can be achieved. Specifically, FIG. 8 is a diagram of a hardware structure of a terminal according to an embodiment of this application.

The terminal 800 includes, but is not limited to: at least some of components of a radio frequency unit 801, a network module 802, an audio output unit 803, an input unit 804, a sensor 805, a display unit 806, a user input unit 807, an interface unit 808, a memory 809, a processor 810, and the like.

A person skilled in the art may understand that, the terminal 800 may further include a power supply (for example, a battery) for supplying power to the components. The power supply may be logically connected to the processor 810 by using a power management system, to implement functions such as charging, discharging, and power consumption management by using the power management system. The structure of the terminal shown in FIG. 8 constitutes no limitation on the terminal. The terminal may include more or fewer components than those shown in the figure, or combine some components, or have different component arrangements. Details are not described herein again.

It should be understood that, in this embodiment of this application, the input unit 804 may include a graphics processing unit (Graphics Processing Unit, GPU) 8041 and a microphone 8042. The graphics processing unit 8041 performs processing on image data of a static image or a video that is obtained by an image capture apparatus (for example, a camera) in a video capture mode or an image capture mode. The display unit 806 may include a display panel 8061, and the display panel 8061 may be configured in a form of a liquid crystal display, an organic light-emitting diode, or the like. The user input unit 807 includes at least one of a touch panel 8071 and another input device 8072. The touch panel 8071 is alternatively referred to as a touchscreen. The touch panel 8071 may include two parts: a touch detection apparatus and a touch controller. The another input device 8072 may include, but is not limited to, a physical keyboard, a function button (for example, a volume control button, a power button, or the like), a trackball, a mouse, and a joystick. Details are not described herein again.

In this embodiment of this application, after receiving downlink data from the network-side device, the radio frequency unit 801 may transmit the downlink data to the processor 810 for processing. In addition, the radio frequency unit 801 may send uplink data to the network-side device. Generally, the radio frequency unit 801 includes, but is not limited to, an antenna, an amplifier, a transceiver, a coupler, a low noise amplifier, a duplexer, and the like.

The memory 809 may be configured to store a software program or instructions and various data. The memory 809 may mainly include a first storage area for storing the program and the instructions and a second storage area for storing the data. The first storage area may store an operating system, an application or instructions required by at least one function (for example, a sound playback function, an image display function, and the like), and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 809 in this embodiment of this application includes, but is not limited to, these memories and any memory of another proper type.

The processor 810 may include one or more processing units. Optionally, the processor 810 integrates an application processor and a modem processor. The application processor mainly processes an operation related to an operating system, a user interface, an application, and the like, and the modem processor mainly processes a wireless communication signal, for example, a baseband processor. It may be understood that, the modem processor may not be integrated into the processor 810.

The radio frequency unit 801 is configured to report target information to a network-side device by a terminal, where the target information indicates at least one of the following: direct current location information of the terminal; and first information, where the first information indicates a frequency component used for determining the direct current location information of the terminal. The direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

The terminal according to embodiments of this application may implement all processes implemented in the terminal-side method embodiment, and the same technical effects can be achieved. Details are not described herein again to avoid repetition.

An embodiment of this application further provides a network-side device, including a processor and a communication interface. The communication interface is configured to receive target information from a terminal, where the target information includes at least one of the following: direct current location information of the terminal; and first information, where the first information indicates a frequency component used for determining the direct current location information of the terminal. The direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer. The network-side device embodiment corresponds to the network-side device method embodiment, and each implementation process and implementation of the method embodiment described above may be used in the network-side device embodiment, and the same technical effects can be achieved.

Specifically, an embodiment of this application further provides a network-side device. As shown in FIG. 9, the network-side device 900 includes: an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information through the antenna 901 and sends the received information to the baseband apparatus 903 for processing. In a downlink direction, the baseband apparatus 903 processes to-be-sent information and sends the information to the radio frequency apparatus 902, and the radio frequency apparatus 902 processes the received information and sends the information through the antenna 901.

The method performed by the network-side device in the foregoing embodiment may be implemented in the baseband apparatus 903. The baseband apparatus 903 includes a baseband processor.

The baseband apparatus 903 may include, for example, at least one baseband board, and a plurality of chips are disposed on the baseband board. As shown in FIG. 9, one of the chips is, for example, the baseband processor, connected to the memory 905 through a bus interface, to invoke a program in the memory 905, to perform an operation performed by the network device shown in the foregoing method embodiment.

The network-side device may further include a network interface 906. The interface is, for example, a common public radio interface (common public radio interface, CPRI).

Specifically, the network-side device 900 in this embodiment of this application further includes: instructions or a program stored in the memory 905 and run on the processor 904. The processor 904 invokes the instructions or the program in the memory 905, to perform the methods performed by the modules shown in FIG. 6, and the same technical effects can be achieved. Details are not described herein again to avoid repetition.

An embodiment of this application further provides a readable storage medium. The readable storage medium stores a program or instructions, and when the program or the instructions are executed by a processor, all processes of the information transmission method embodiment are implemented and the same technical effects can be achieved. Details are not described herein again to avoid repetition.

The processor is the processor in the terminal described in the foregoing embodiment. The readable storage medium may be non-volatile or non-transient. The readable storage medium may include a computer-readable storage medium, for example, a computer read only memory ROM, a random access memory RAM, a magnetic or an optical disc, and the like.

An embodiment of this application further provides a chip. The chip includes a processor and a communication interface. The communication interface is coupled to the processor, and the processor is configured to run a program or instructions, to implement all processes of the information transmission method embodiment, and the same technical effects can be achieved. Details are not described herein again to avoid repetition.

It should be understood that, the chip in this embodiment of this application may alternatively be referred to as a system-level chip, a system chip, a chip system, a system-on-chip, or the like.

An embodiment of this application further provides a computer program/program product. The computer program/program product is stored in a storage medium. The computer program/program product is executed by at least one processor, to implement all processes of the information transmission method embodiment, and the same technical effects can be achieved. Details are not described herein again to avoid repetition.

An embodiment of this application further provides an information transmission system, including: a terminal and a network-side device. The terminal is configured to perform all processes in FIG. 3 and the foregoing method embodiments. The network-side device is configured to perform all processes in FIG. 4 and the foregoing method embodiments, and the same technical effects can be achieved. Details are not described herein again to avoid repetition.

It should be noted that, the terms "include", "comprise", or any other variation thereof in this specification is intended to cover a non-exclusive inclusion, so that a process, a method, an article, or an apparatus that includes a list of elements not only includes those elements but also includes other elements that are not expressly listed, or further includes elements inherent to such a process, a method, an article, or an apparatus. An element preceded by "includes a" does not, without more constraints, preclude the presence of additional identical elements in the process, the method, the article, or the apparatus that includes the element. In addition, it should be noted that, scopes of the method and the apparatus in the implementations of this application are not limited to performing functions in an order shown or discussed, but may include performing functions in a substantially concurrent manner or in reverse order depending on functionality involved. For example, the methods described may be performed in an order different from that described, and various steps may alternatively be added, omitted, or combined. In addition, characteristics described with reference to some examples may alternatively be combined in another example.

Based on the descriptions of the foregoing implementations, a person skilled in the art may clearly understand that the method according to the foregoing embodiment may be implemented by software in addition to necessary universal hardware platform, or by using hardware. In many cases, the former is a better implementation. Based on such an understanding, the technical solutions of this application essentially or the part contributing to the conventional technology may be implemented in a form of a computer software product. The computer software product is stored in a storage medium (such as a ROM/RAM, a magnetic disk, or an optical disc) and includes several indications for instructing a terminal (which may be a mobile phone, a computer, a server, an air conditioner, a network device, or the like) to perform the methods described in embodiments of this application.

Embodiments of this application are described with reference to the accompanying drawings. This application is not limited to the specific implementations described above, and the specific implementations described above are merely examples and not limited. A person of ordinary skill in the art may also make various variations under the inspiration of this application and without departing from the purpose of this application and the protection scope of the claims, and such variations shall all fall within the protection scope of this application.

## Claims

1. An information transmission method, comprising:
reporting, by a terminal, target information to a network-side device, wherein the target information comprises at least one of the following:
direct current location information of the terminal; and
first information, wherein the first information indicates a frequency component used for determining the direct current location information of the terminal, wherein
the direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

2. The method according to claim 1, wherein the component carrier combination comprises at least one of the following:
a bandwidth part BWP index of a component carrier in intra-band carrier aggregation; and
a state of a component carrier in intra-band carrier aggregation, wherein
the state of the component carrier comprises an activated state or a deactivated state, and the BWP index comprises an activated BWP index in an activated component carrier.

3. The method according to claim 1 or 2, wherein in a case that the direct current location information associated with different component carrier combinations is determined based on a first frequency component, the first information comprises the first frequency component; and
the direct current location information of the terminal comprises one of the following:
a first offset; and
a first list, wherein the first list comprises at least one first offset, wherein
the first offset is an offset between a direct current location of the terminal and a first default direct current location, and the first default direct current location is determined based on the first frequency component.

4. The method according to claim 3, wherein the first frequency component comprises one of the following:
a configured component carrier; and
a configured BWP.

5. The method according to claim 3, wherein
in a case that the direct current location information of the terminal comprises the first offset, the direct current location information associated with the N component carrier combinations is the first offset; or
in a case that the direct current location information of the terminal comprises the first list, an n^{th} element in the first list indicates direct current location information associated with an n^{th} component carrier combination in the N component carrier combinations, and n is a positive integer.

6. The method according to claim 5, wherein in a case that a value of the n^{th} element is null, an m^{th} element in the first list indicates the direct current location information associated with the n^{th} component carrier combination, wherein a value of the m^{th} element in the first list is not null, and m and n are different positive integers.

7. The method according to claim 5, wherein in a case that a value of the n^{th} element is null, an i^{th} element in the first list indicates the direct current location information associated with the n^{th} component carrier combination, wherein
a state of a component carrier indicated by an i^{th} component carrier combination in the N component carrier combinations is the same as a state of a component carrier indicated by the n^{th} component carrier combination, and i and n are different positive integers.

8. The method according to claim 1, wherein in a case that the direct current location information corresponding to different component carrier combinations is determined based on a second frequency component, the first information comprises the second frequency component; and
the direct current location information of the terminal comprises a second list, and the second list comprises at least one second offset.

9. The method according to claim 8, wherein the second frequency component comprises one of the following:
an activated component carrier; and
an activated BWP.

10. The method according to claim 8, wherein a k^{th} second offset in the at least one second offset is an offset between a direct current location of the terminal and a k^{th} second default direct current location, the k^{th} second default direct current location is determined based on the second frequency component, the k^{th} second default direct current location is associated with a k^{th} component carrier combination in the N component carrier combinations, and k is a positive integer.

11. The method according to claim 10, wherein a k^{th} element in the second list indicates direct current location information associated with the k^{th} component carrier combination in the N component carrier combinations.

12. The method according to claim 11, wherein in a case that the second frequency component is an activated component carrier and a value of the k^{th} element is null, an x^{th} element in the second list indicates the direct current location information associated with the k^{th} component carrier combination in the N component carrier combinations, wherein a state of a component carrier indicated by the k^{th} component carrier combination is the same as a state of a component carrier indicated by an x^{th} component carrier combination in the N component carrier combinations, and x and k are different positive integers.

13. The method according to claim 1, wherein in a case that the direct current location information associated with different component carrier combinations is at least partially determined based on different frequency components, the first information comprises one of the following:
a third list, wherein the third list comprises at least one frequency component; and
a third frequency component, wherein the third frequency component comprises one of the following: an activated component carrier, an activated BWP, a configured component carrier, and a configured BWP.

14. The method according to claim 13, wherein in a case that the direct current location information corresponding to different component carrier combinations is at least partially determined based on different frequency components, the direct current location information of the terminal comprises a fourth list, wherein the fourth list comprises at least one third offset; and
a p^{th} third offset in the at least one third offset is an offset between a direct current location of the terminal and a p^{th} third default direct current location, the p^{th} third default direct current location is associated with a p^{th} component carrier combination in the N component carrier combinations, and p is a positive integer.

15. The method according to claim 13 or 14, wherein
in a case that the first information comprises the third list, the terminal determines that a frequency component used by first direct current location information is a frequency component indicated by an s^{th} element in the third list, wherein the first direct current location information is direct current location information associated with an s^{th} component carrier combination in the N component carrier combinations, and s is a positive integer; and/or
in a case that the first information comprises the third frequency component, the terminal determines that the frequency component used by the direct current location information of the terminal is the third frequency component.

16. The method according to claim 14, wherein a p^{th} element in the fourth list indicates direct current location information associated with the p^{th} component carrier combination.

17. The method according to claim 16, wherein in a case that the first information comprises the third frequency component, the third frequency component is the activated component carrier, and a value of the p^{th} element in the fourth list is null, a y^{th} element in the fourth list indicates the direct current location information associated with the p^{th} component carrier combination, wherein a state of a component carrier indicated by the p^{th} component carrier combination is the same as a state of a component carrier indicated by a y^{th} component carrier combination in the N component carrier combinations, and y and p are different positive integers.

18. The method according to claim 16, wherein in a case that the first information comprises the third list, a p^{th} element in the third list is a fourth frequency component, and a value of the p^{th} element in the fourth list is null, an l^{th} element in the fourth list indicates the direct current location information associated with the p^{th} component carrier combination, wherein an l^{th} element in the third list is the fourth frequency component, l and p are different positive integers, and a type of the fourth frequency component comprises a configured component carrier or a configured BWP.

19. The method according to claim 1, wherein before the reporting, by a terminal, target information to a network-side device, the method further comprises:
receiving, by the terminal, a first configuration from the network-side device, wherein the first configuration comprises at least one of the following:
the N component carrier combinations; and
at least one cell index.

20. The method according to claim 1, wherein before the reporting, by a terminal, target information to a network-side device, the method further comprises:
receiving, by the terminal, L second configurations from the network-side device, wherein
the second configuration comprises at least one of the following:
at least one component carrier combination; and
at least one cell index, wherein the at least one cell index indicates a component carrier in one component carrier set, wherein
the N component carrier combinations are determined based on the L second configurations, and L is a positive integer.

21. The method according to claim 20, wherein in a case that component carrier combinations comprised in the L second configurations are not related to a first component carrier, the method further comprises one of the following:
determining, by the terminal, the N component carrier combinations based on the component carrier combinations comprised in the L second configurations and a first state of the first component carrier, wherein the first state is a deactivated state; and
determining, by the terminal, the N component carrier combinations based on the component carrier combinations comprised in the L second configurations and a first component carrier combination, wherein the first component carrier combination comprises all component carrier combinations related to the first component carrier, wherein
component carriers indicated by the L second configurations and the first component carrier are located in a same component carrier group.

22. The method according to claim 20, wherein the method further comprises:
reporting, by the terminal, the N component carrier combinations to the network-side device.

23. An information transmission method, comprising:
receiving, by a network-side device, target information from a terminal, wherein the target information comprises at least one of the following:
direct current location information of the terminal; and
first information, wherein the first information indicates a frequency component used for determining the direct current location information of the terminal, wherein
the direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

24. The method according to claim 23, wherein the component carrier combination comprises at least one of the following:
a bandwidth part BWP index of a component carrier in intra-band carrier aggregation; and
a state of a component carrier in intra-band carrier aggregation, wherein
the state of the component carrier comprises an activated state or a deactivated state, and the BWP index comprises an activated BWP index in an activated component carrier.

25. The method according to claim 23 or 24, wherein in a case that the direct current location information associated with different component carrier combinations is determined based on a first frequency component, the first information comprises the first frequency component; and
the direct current location information of the terminal comprises one of the following:
a first offset; and
a first list, wherein the first list comprises at least one first offset, wherein
the first offset is an offset between a direct current location of the terminal and a first default direct current location, and the first default direct current location is determined based on the first frequency component.

26. The method according to claim 25, wherein the first frequency component comprises one of the following:
a configured component carrier; and
a configured BWP.

27. The method according to claim 25, wherein
in a case that the direct current location information of the terminal comprises the first offset, the direct current location information associated with the N component carrier combinations is the first offset; or
in a case that the direct current location information of the terminal comprises the first list, an n^{th} element in the first list indicates direct current location information associated with an n^{th} component carrier combination in the N component carrier combinations, and n is a positive integer.

28. The method according to claim 27, wherein in a case that a value of the n^{th} element is null, an m^{th} element in the first list indicates the direct current location information associated with the n^{th} component carrier combination, wherein a value of the m^{th} element in the first list is not null, and m and n are different positive integers.

29. The method according to claim 27, wherein in a case that a value of the n^{th} element is null, an i^{th} element in the first list indicates the direct current location information associated with the n^{th} component carrier combination, wherein
a state of a component carrier indicated by an i^{th} component carrier combination in the N component carrier combinations is the same as a state of a component carrier indicated by the n^{th} component carrier combination, and i and n are different positive integers.

30. The method according to claim 23, wherein in a case that the direct current location information corresponding to different component carrier combinations is determined based on a second frequency component, the first information comprises the second frequency component; and
the direct current location information of the terminal comprises a second list, and the second list comprises at least one second offset.

31. The method according to claim 30, wherein the second frequency component comprises one of the following:
an activated component carrier; and
an activated BWP.

32. The method according to claim 30, wherein a k^{th} second offset in the at least one second offset is an offset between a direct current location of the terminal and a k^{th} second default direct current location, the k^{th} second default direct current location is determined based on the second frequency component, the k^{th} second default direct current location is associated with a k^{th} component carrier combination in the N component carrier combinations, and k is a positive integer.

33. The method according to claim 32, wherein a k^{th} element in the second list indicates direct current location information associated with the k^{th} component carrier combination in the N component carrier combinations.

34. The method according to claim 33, wherein in a case that the second frequency component is an activated component carrier and a value of the k^{th} element is null, an x^{th} element in the second list indicates the direct current location information associated with the k^{th} component carrier combination in the N component carrier combinations, wherein a state of a component carrier indicated by the k^{th} component carrier combination is the same as a state of a component carrier indicated by an x^{th} component carrier combination in the N component carrier combinations, and x and k are different positive integers.

35. The method according to claim 23, wherein in a case that the direct current location information associated with different component carrier combinations is at least partially determined based on different frequency components, the first information comprises one of the following:
a third list, wherein the third list comprises at least one frequency component; and
a third frequency component, wherein the third frequency component comprises one of the following: an activated component carrier, an activated BWP, a configured component carrier, and a configured BWP.

36. The method according to claim 35, wherein in a case that the direct current location information corresponding to different component carrier combinations is at least partially determined based on different frequency components, the direct current location information of the terminal comprises a fourth list, wherein the fourth list comprises at least one third offset; and
a p^{th} third offset in the at least one third offset is an offset between a direct current location of the terminal and a p^{th} third default direct current location, the p^{th} third default direct current location is associated with a p^{th} component carrier combination in the N component carrier combinations, and p is a positive integer.

37. The method according to claim 35 or 36, wherein
in a case that the first information comprises the third list, the terminal determines that a frequency component used by first direct current location information is a frequency component indicated by an s^{th} element in the third list, wherein the first direct current location information is direct current location information associated with an s^{th} component carrier combination in the N component carrier combinations, and s is a positive integer; and/or
in a case that the first information comprises the third frequency component, the terminal determines that the frequency component used by the direct current location information of the terminal is the third frequency component.

38. The method according to claim 36, wherein a p^{th} element in the fourth list indicates direct current location information associated with the p^{th} component carrier combination.

39. The method according to claim 38, wherein in a case that the first information comprises the third frequency component, the third frequency component is the activated component carrier, and a value of the p^{th} element in the fourth list is null, a y^{th} element in the fourth list indicates the direct current location information associated with the p^{th} component carrier combination, wherein a state of a component carrier indicated by the p^{th} component carrier combination is the same as a state of a component carrier indicated by a y^{th} component carrier combination in the N component carrier combinations, and y and p are different positive integers.

40. The method according to claim 38, wherein in a case that the first information comprises the third list, a p^{th} element in the third list is a fourth frequency component, and a value of the p^{th} element in the fourth list is null, an l^{th} element in the fourth list indicates the direct current location information associated with the p^{th} component carrier combination, wherein an l^{th} element in the third list is the fourth frequency component, l and p are different positive integers, and a type of the fourth frequency component comprises a configured component carrier or a configured BWP.

41. The method according to claim 23, wherein before the receiving, by a network-side device, target information from a terminal, the method further comprises:
sending, by the network-side device, a first configuration to the terminal, wherein the first configuration comprises at least one of the following:
the N component carrier combinations; and
at least one cell index.

42. The method according to claim 23, wherein before the receiving, by a network-side device, target information from a terminal, the method further comprises:
sending, by the network-side device, L second configurations to the terminal, wherein
the second configuration comprises at least one of the following:
at least one component carrier combination; and
at least one cell index, wherein the at least one cell index indicates a component carrier in one component carrier set, wherein
the N component carrier combinations are determined based on the L second configurations, and L is a positive integer.

43. The method according to claim 42, wherein the method further comprises:
receiving, by the network-side device, the N component carrier combinations from the terminal.

44. An information transmission apparatus, comprising:
a first reporting module, configured to report target information to a network-side device, wherein the target information comprises at least one of the following:
direct current location information of a terminal; and
first information, wherein the first information indicates a frequency component used for determining the direct current location information of the terminal, wherein
the direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

45. An information transmission apparatus, comprising:
a first receiving module, configured to receive target information from a terminal, wherein the target information comprises at least one of the following:
direct current location information of the terminal; and
first information, wherein the first information indicates a frequency component used for determining the direct current location information of the terminal, wherein
the direct current location information of the terminal indicates direct current location information associated with N component carrier combinations; direct current location information associated with different component carrier combinations is determined based on a same frequency component, or direct current location information associated with different component carrier combinations is at least partially determined based on different frequency components; and N is a positive integer.

46. A terminal, comprising a processor and a memory, wherein the memory stores a program or instructions that can be run on the processor, and when the program or the instructions are executed by the processor, steps of the information transmission method according to any one of claims 1 to 22 are implemented.

47. A network-side device, comprising a processor and a memory, wherein the memory stores a program or instructions that can be run on the processor, and when the program or the instructions are executed by the processor, steps of the information transmission method according to any one of claims 23 to 43 are implemented.

48. A readable storage medium, wherein the readable storage medium stores a program or instructions, and when the program or the instructions are executed by a processor, steps of the information transmission method according to any one of claims 1 to 22 are implemented, or steps of the information transmission method according to any one of claims 23 to 43 are implemented.
